(19) Europäisches Patentamt
European Patent Office
Office européen des brevets

(11) **EP 3 817 852 B1**

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **20775331.0**

(22) Anmeldetag: **25.09.2020**

(51) Internationale Patentklassifikation (IPC):
*B01J 21/04* (2006.01)   *B01J 25/00* (2006.01)
*B01J 35/10* (2006.01)   *B01J 37/02* (2006.01)
*B01J 37/08* (2006.01)   *B01J 19/30* (2006.01)
*B01J 37/00* (2006.01)   *B01J 35/04* (2006.01)

(52) Gemeinsame Patentklassifikation (CPC):
**B01J 35/1014; B01J 19/30; B01J 21/04;
B01J 25/00; B01J 35/04; B01J 35/1019;
B01J 37/0018; B01J 37/0217; B01J 37/0225;
B01J 37/08;** B01J 2219/32286; B01J 2219/32466

(86) Internationale Anmeldenummer:
**PCT/EP2020/076823**

(87) Internationale Veröffentlichungsnummer:
**WO 2021/058703 (01.04.2021 Gazette 2021/13)**

(54) **KATALYTISCHER REAKTOR**

CATALYTIC REACTOR

RÉACTEUR CATALYTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2019 EP 19199657**

(43) Veröffentlichungstag der Anmeldung:
**12.05.2021 Patentblatt 2021/19**

(73) Patentinhaber: **Evonik Operations GmbH 45128 Essen (DE)**

(72) Erfinder:
• **ROOS, Meike
  63654 Büdingen (DE)**
• **POSS, René
  76187 Karlsruhe (DE)**
• **BERWEILER, Monika
  63477 Maintal (DE)**
• **GÖTTLINGER, Markus
  63517 Rodenbach (DE)**

(74) Vertreter: **Evonik Patent Association c/o Evonik Industries AG IP Management Bau 1042A/PB 15 Paul-Baumann-Straße 1 45772 Marl (DE)**

(56) Entgegenhaltungen:
EP-A1- 3 300 798     EP-A1- 3 300 799
US-A1- 2003 047 505

## Beschreibung

## Hintergrund und Stand der Technik

Gegenstand der Erfindung ist ein katalytischer Reaktor für großtechnische Hydrierprozesse. Der katalytische Reaktor enthält ein katalytisches Festbett, das eine Trägerstruktur und einen Katalysator umfasst und sich durch besondere Merkmale auszeichnet.

Katalytische Hydrierprozesse gehören zu den wichtigsten Operationen in der chemischen Industrie. Sie sind ein zentraler Bestandteil der organischen Grundstofferzeugung ebenso wie der Weiterverarbeitung organischer Grundchemikalien zu teilweise hochspezialisierten Endprodukten für eine Vielzahl von Alltagsanwendungen in allen Bereichen des täglichen Lebens. Dabei sind die jeweiligen Hydrierprozesse in ihrer detaillierten Ausführung so unterschiedlich, wie die am Ende der Prozesskette entstehenden Endprodukte, die uns im täglichen Leben begleiten - von der Margarine über die Allwetterjacke bis hin zu Treibstoffen, Schaum- und Kunststoffen, Agrochemikalien, Pharmazeutika, Lacken, Beschichtungen und vieles mehr. Gemeinsam ist allen großtechnischen Hydrierprozessen, dass sie bei erhöhten Temperaturen und unter erhöhtem Druck in Gegenwart mindestens stöchiometrischer Mengen Wasserstoff und unter Verwendung katalytischer Kontakte durchgeführt werden.

Hydrierreaktionen sind exotherm. Die Reaktionsenthalpie liegt in der Regel im Bereich von 105 - 125 kJ pro mol $H_2$. Ein zu starker Anstieg der Temperatur führt gemäß dem Le Chatelier'schen Prinzip zu einer Verschiebung des chemischen Gleichgewichtes auf die Eduktseite - fördert also die Dehydrierung - und wirkt den Ausbeuten der aus der Hydrierung resultierenden Zielprodukte entgegen. Maßnahmen zur Regulierung der Reaktionstemperatur sind daher ebenso integraler und wesentlicher Bestandteil von industriellen Hydrierprozessen, wie der Einsatz geeigneter Hydrierkatalysatoren, die die Aktivierungsenergie der Reaktion im kinetisch kontrollierten Temperaturbereich (-und somit die über die Temperatur einzubringende Energie, die notwendig ist, um die Reaktion in Gang zu setzen-) vermindern. Eine übliche Maßnahme ist ein auf die Zielreaktion abgestimmtes, oft hoch spezielles Reaktordesign. So kommen bei der Hydrierung von gasförmigen Edukten unter anderem Reaktoren zum Einsatz, die so konstruiert sind, dass die Temperaturen aller Reaktionsstufen durch Wärmeaustausch oder durch die Zufuhr heißer oder kalter Gase beeinflußt werden können. Bei sehr starker Wärmeentwicklung sind isotherm betriebene Reaktoren üblich, in denen die Temperatur über ein spezielles Wärmeaustauschmedium reguliert wird. Allen großtechnischen Reaktoren ist gemeinsam, dass sie über lange Zeiträume stationär d.h. unter gleichbleibenden Betriebsbedingungen betrieben werden (vgl. Ullmann's Encyclopedia of Industrial Chemistry: G. Eigenberger, W. Ruppel: "Catalytic Fixed-Bed Reactors", Wiley-VCH, Online-ISBN: 9783527306732 | DOI: 10.1002/14356007; 2012).

Eine Vielzahl weiterer Parameter bestimmen Umsatz, Ausbeute und Selektivität einer Hydrierreaktion. Eine Übersicht findet sich u. a. in Ullmann's Encyclopedia of Industrial Chemistry: D. Sanfilippo, P. N. Rylander: "Hydrogenation and Dehydrogenation", Wiley-VCH, Online-ISBN: 9783527306732 | DOI: 10.1002/14356007; 2012.

Häufig werden die Hydrierreaktionen großtechnisch in kontinuierlich betriebenen Festbettreaktoren durchgeführt. Unter einem Festbett versteht man einen im Inneren eines Reaktors fixierten, mit einem Katalysator versehenen Träger (Einbau) mit großer Oberfläche (vgl. RÖMPP Online - *Hydroprocessing*). Der Reaktor wird mit zur Reaktion zu bringenden Gasen - bei Hydrierprozessen mindestens Wasserstoff - und/oder Flüssigkeiten (Fluide) durchströmt. Die Gesamtheit der Fluide, die gegebenenfalls auch ein zusätzliches Lösungsmittel umfassen können, werden nachfolgend als Reaktionsmedium bezeichnet.

Die Reaktion selbst findet am Katalysator (Kontakt) statt. Der Katalysator ist auf dem Träger aufgebracht. Der Träger kann eine Schicht (Schüttung, Füllung) eines feinkörnigen Feststoffs (Trägermaterial: Körner, Kugeln, Pellets, etc.; nachfolgend bezeichnet als "Schüttgut"), ein Rohrbündel, eine strukturierte Packung usw. sein (vgl. RÖMPP Online - *Festbett für die chemische Katalyse)*.

Großtechnische Festbettreaktoren zur Hydrierung flüssiger Eduke können als Rieselbettreaktoren, Sumpfreaktoren oder als gepackte Blasensäulenreaktoren ausgeführt sein. In Rieselbettreaktoren werden mindestens die flüssigen Bestandteile des Reaktionsmedium von oben auf das Festbett aufgebracht. Die räumliche Verteilung des flüssigen Reaktionsmediums im Festbett wird bei diesem Reaktortyp durch die Einbringkonstruktion für die Fluide im Reaktorkopf mitbestimmt. Viele Sumpfreaktoren und gepackte Blasensäulenreaktoren werden vom Reaktionsmedium von unten nach oben durchströmt, so dass sich das Reaktionsmedium in jedem Fall über den gesamten Reaktorquerschnitt verteilt. In Blasensäulenreaktoren werden in der Regel Festbetten aus feinkörnigeren Schüttgütern eingesetzt als in Rieselbettreaktoren. Zudem werden von unten beströmte Festbettreaktoren meist bei höheren Drücken betrieben als herkömmliche Rieselbettreaktoren, um das Ausgasen von leicht flüchtige Komponenten des Reaktionsmediums zu verhindern.

Die Reaktorleistung von Festbettreaktoren wird unter anderem und in wesentlichem Ausmaß bestimmt von der Kontaktfläche des Katalysators (Kontakt) mit dem Reaktionsmedium. Unter "Kontaktfläche" wird die durch den Träger bereitgestellte markoskopische, d. h. geometrische Oberfläche verstanden, auf die der Katalysator aufgebracht ist und die im Reaktionsbetrieb mit dem Reaktionsmedium in Berührung kommt. Je größer diese Kontaktfläche ist, umso größere Reaktorleistungen sind zu erwarten. Im Allgemeinen werden umso größere Kontaktflächen bereitgestellt, je feinkörniger das zum Aufbau des Festbetts verwendete Schüttgut ist.

Beim Durchströmen des katalytischen Festbettes entsteht aufgrund des Strömungswiderstandes ein Druckverlust, der von Form und Größe des Trägers ebenso abhängt, wie von der Strömungsgeschwindigkeit und Fließfähigkeit des Reaktionsmediums. Typischerweise ist dieser Druckverlust umso größer, je feinkörniger das zum Aufbau des Festbetts verwendete Schüttgut ist.

Werden die Strömungswiderstände im Festbett zu hoch, können Schüttgutpartikel in Bewegung geraten. Je nach eingesetztem Material kann die Bewegung im Festbett zu mechanischem Abrieb führen, der über Zeit in einem Verlust an auf dem Träger aufgebrachtem Katalysator und somit zu Reaktorleistungsverlusten führt. Weiterhin kann diese Bewegung im Festbett zur Ausbildung von größeren Strömungskanälen innerhalb des Bettes führen, durch die das Reaktionsmedium hindurch strömt, ohne dass alle im Fluid enthaltenden Reaktanden mit der katalytischen Kontaktfläche in Berührung kommen. In Dreiphasensystemen, in denen gasförmiger Wasserstoff und flüssige Edukte an einem heterogenen, d.h. festen Katalysator zur Reaktion gebracht werden sollen, kann es in solchen Strömungskanälen beispielsweise zu einer Entmischung der Gasphase (d.h. des Wasserstoffs) und der Flüssigphase kommen. Stofftransportlimitierungen beim Antransport von Wasserstoff und/oder zu hydrierenden Eduktmolekülen an die Katalysatoroberfläche und somit Verminderungen des Gesamtumsatzes und ergo der Reaktorleistung sind die Folge.

Bei der Auswahl eines für den Aufbau eines katalytischen Festbetts geeigneten Trägers besteht also ein Zielkonflikt zwischen der Bereitstellung einer möglichst großen Kontaktfläche zwischen Reaktionsmedium und Träger einerseits und der Vermeidung von hohen Strömungswiderständen, die durch zu feinkörniges Trägermaterial verursacht werden und die vorstehend beschriebenen Nachteile mit sich bringen, andererseits. Da der Druckverlust mit abnehmendem Partikeldurchmesser stark ansteigt, werden industriell nur Schüttgüter mit einem Partikeldurchmesser > 2 mm eingesetzt (vgl. M. Baerns et al, Technische Chemie, Kap. 8.8.1.1, 2. Auflage 2013, ISBN 978-3-527-33072-0).

Großtechnisch eingesetzte kontinuierliche betriebenen Festbettreaktoren können Festbettvolumina von bis zu 100 m³ aufweisen. Je nach Schüttdichte des zum Aufbau des Festbetts eingesetzten Schüttguts und Höhe des eingesetzten Festbetts lasten somit auf den Tragkonstruktionen des Reaktors selbst, den Tragkonstruktionen für das Festbett im Reaktor und insbesondere auf den unteren Schichten des katalytischen Festbetts gegebenenfalls mehrere metrische Tonnen an Gewicht. Verfügt der zum Aufbau des Festbetts eingesetzte Träger nicht über eine hinreichende mechanische Stabilität und Belastbarkeit, um diese Gewichte über mehrere tausend Betriebsstunden zu tragen, kann es zum Bruch der Trägerstrukturen und somit zur mechanischen Zerstörung der katalytisch aktiven Bereiche kommen (Katalysatorbruch). Bruchmaterial kann mit dem Fluid aus dem Reaktor in angrenzende Anlagenteile ausgetragen werden und/oder zu Verbackungen im Festbetts führen. In beiden Fällen sind erhebliche Störungen des Anlagenbetriebes die Folge.

Im Stand der Technik sind eine Vielzahl verschiedenster Ausführungsformen von katalytischen Festbett-Reaktoren bekannt, die (auch) in großtechnischen Hydrierprozessen eingesetzt werden. Eine umfassende Übersicht stellen unter anderem G. Eigenberger und W. Ruppel in *Ullmann's Encyclopedia of Industrial Chemistry* bereit (Ullmann's Encyclopedia of Industrial Chemistry: G. Eigenberger, W. Ruppel: "Catalytic Fixed-Bed Reactors", Wiley-VCH, Online-ISBN: 9783527306732 | DOI: 10.1002/14356007; 2012). Die Patentanmeldung US2003047505 beschreibt eine solche Ausführungsform.

## Die vorliegende Erfindung

Aufgabe der vorliegenden Erfindung ist es, einen verbesserten katalytischen Reaktor für großtechnische Hydrierprozesse bereitzustellen, der in möglichst vielen Hydrierprozessen einsetzbar ist, da er eine möglichst große Kontaktfläche zwischen Reaktionsmedium und Träger bereitstellt, wobei aber zugleich die Strömungswiderstände des Reaktionsmediums durch das Festbett minimiert sind, und bei dem weiterhin eine Trägerstruktur zum Einsatz kommt, die über eine verbesserte mechanische Stabilität verfügt, so dass Katalysatorbruch über die Betriebsdauer des Reaktors sicher vermieden wird. Die Aufgabe wird gelöst durch einen katalytischen Reaktor, wie im Anspruch 1 beschrieben, enthaltend ein katalytisches Festbett mit einem Volumen V umfassend eine Trägerstruktur und einen Katalysator, gekennzeichnet durch folgende Merkmale:

- Das katalytische Festbett ist im Reaktionsbetrieb zu mindestens 85 Vol.-% mit Reaktionsmedium gefüllt; und
- die Kontaktfläche des Katalysators mit dem Reaktionsmedium beträgt mindestens 2000 m² pro m³ Volumen des katalytischen Festbetts.

Das im erfindungsgemäßen katalytischen Reaktor eingesetzte katalytische Festbett umfasst eine dreidimensional in alle Raumrichtungen eng vernetzte Trägerstruktur, aufgebaut aus Materialstegen. Auf diese Trägerstruktur wird der Katalysator aufgebracht.

Es wurde gefunden, dass der vorstehend beschriebene Zielkonflikt zwischen der Bereitstellung einer möglichst großen Kontaktfläche zwischen Reaktionsmedium und Katalysator einerseits und der Vermeidung von hohen Strömungswiderständen beim Durchströmen des Reaktionsmediums durch das katalytische Festbett andererseits gelöst werden kann, wenn die Dicke der die Trägerstruktur ausbildenden Materialstege im Bereich von 5 bis 25 $\mu$m liegt. Zudem muss die Trägerstruktur eine Vernetzungsdichte von mindestens 3 mm$^{-3}$ aufweisen, d. h. es müssen mindestens 3 Vernetzungsstellen pro mm$^3$ Volumen des katalytisch aktiven Festbetts vorliegen. Eine Vernetzungsstelle ist ein Punkt in der Trägerstruktur, an dem Materialstege aus mindestens zwei Raumrichtungen zusammentreffen und dort eine stoffschlüssige Verbindung ausbilden. Als Vernetzungsdichte wird die Anzahl der Vernetzungsstellen pro Volumen bezeichnet. Unter einem Materialsteg wird die stoffschlüssige Verbindung zweier Vernetzungsstellen verstanden. Bevorzugt weisen die die Trägerstruktur ausbildenden Materialstege eine Dicke von 5 bis 15 $\mu$m auf. Die Vernetzungsdichte beträgt bevorzugt 3 bis 100 mm$^{-3}$ und ganz besonders bevorzugt 10 bis 65 mm$^{-3}$.

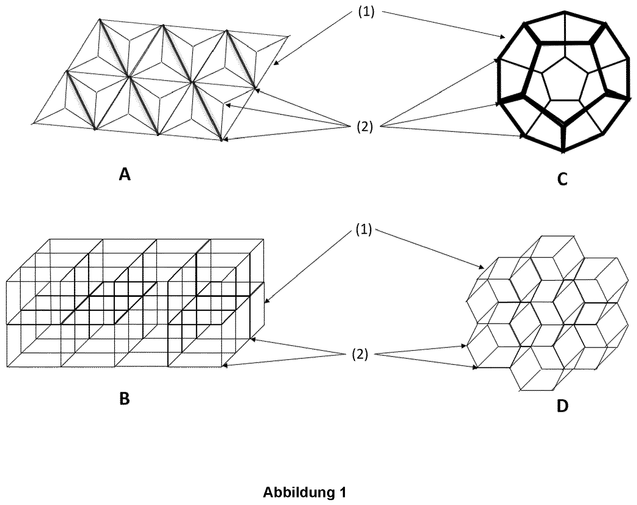

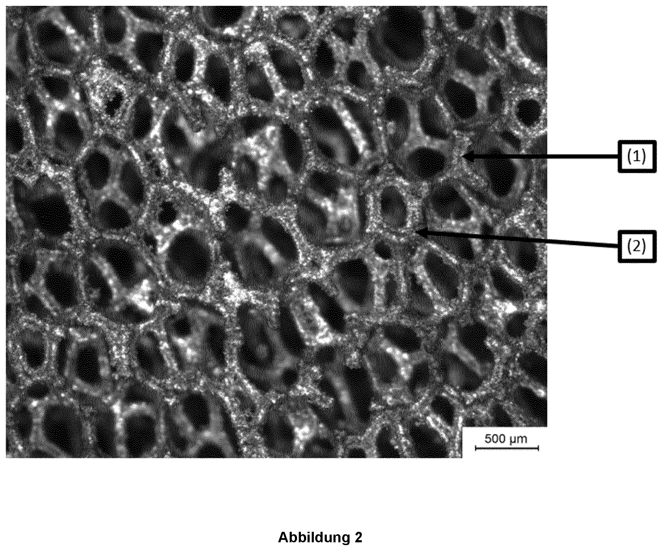

Abbildung 1 zeigt in einer nicht maßstabsgetreuen Prinzip-Skizze Ausschnitte aus Beispielen für erfindungsgemäße Trägerstrukturen und erläutert graphisch die Begriffe "Materialsteg" (1) und "Vernetzungsstelle" (2). Abbildung 2 ist eine lichtmikroskopische Aufnahme eines Ausschnitts aus einer erfindungsgemäßen Trägerstruktur.

Um eine hinreichende Stabilität des katalytischen Festbetts insbesondere für größere katalytische Reaktoren zu gewährleisten, muss die Trägerstruktur aus einem Material bestehen, das über eine ausreichende mechanische Belastbarkeit und Festigkeit verfügt. Des Weiteren muss das Material hinreichend thermisch beständig und druckfest sein, um den in Hydrierreaktoren typischerweise herrschenden Reaktionsbedingungen unverändert standzuhalten. Eine weitere Grundanforderung an das Trägermaterial ist dessen chemische Beständigkeit.

Der Begriff "Festigkeit" beschreibt den höchstmöglichen inneren Widerstand eines Werkstoffs gegen eine äußere Beanspruchung. Es ist die mechanische Spannung, die bei gleichmäßiger Steigerung der Belastung zum Bruch des Werkstoffs führt. Typische Beanspruchungsarten sind unter anderem Belastungen durch Zug, Druck, Knickung oder Biegung des Werkstoffs. Festigkeiten können experimentell ermittelt werden, wobei es für die Bestimmung der Festigkeiten unterschiedliche DIN-Normen je nach Art der Beanspruchung des Werkstoffs gibt. So findet sich eine Beschreibung der experimentellen Bestimmung der Druckfestigkeiten von Metallen beispielsweise in der Norm DIN 50106:2016-11.

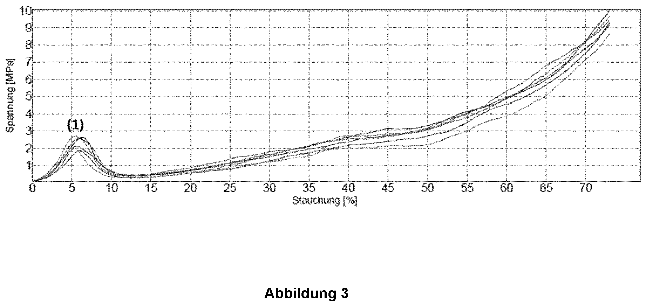

Um eine hinreichende Stabilität des katalytischen Festbetts zu gewährleisten, muss die erfindungsgemäße Trägerstruktur eine hinreichende Druckfestigkeit aufweisen, da insbesondere auf den unteren Schichten des katalytischen Festbetts in einem großtechnischen Reaktor mit mehreren Kubikmetern Volumen gegebenenfalls mehrere Tonnen Gewicht lasten. Es ist zu berücksichtigen, dass die Bestimmung der Druckfestigkeit der erfindungsgemäßen Trägerstruktur experimentell nach dem in DIN 50106:2016-11 beschriebenen Verfahren erfolgen kann, die Beurteilung und Auswertung der dabei erhaltenen Daten allerdings in angepasster Weise erfolgen muss, da es sich nicht um ein solides Werkstück, sondern um eine dreidimensional hochvernetzte Struktur aus dünnen Materialstegen handelt. Der spezielle Aufbau der erfindungsgemäßen Trägerstrukturen hat zur Folge, dass bereits bei der Aufgabe relativ geringer Kräfte eine plastische Verformung der Materialstege in der Probe auftreten kann. Die aus der Druckfestigkeitsmessung resultierende Spannkraft-Stauchungskurve zeigt daher bereits bei mäßigen Stauchungswerten eine Unstetigkeit und ein lokales Maximum in der Spannkraft, bevor nach einem Abfall der Spannkraft ein stetiger Anstieg mit steigender Stauchung erfolgt, wie er auch bei "klassischen" soliden Werkstücken zu beobachten ist (vgl. Abbildung 3). Dieses lokale Maximum der Spannkraft-Stauchungskurve kann zur Bestimmung der Druckfestigkeit solcher dreidimensional hochvernetzten Strukturen herangezogen werden. Die am lokalen Maximum der Spannkraft-Stauchungskurve bestimmte Spannkraft bezogen auf das Volumen der Probe wird als Trägerdruckfestigkeit bezeichnet. Die erfindungsgemäße Trägerstruktur weist Trägerdruckfestigkeiten im Bereich von 0,5 bis 20 kPa/mm$^3$ auf, bevorzugt 1 bis 15 kPa/mm$^3$ und besonders bevorzugt 1,5 bis 7,5 kPa/mm$^3$.

Durch die Kombination der vorstehend beschriebenen Merkmale der Trägerstruktur ergibt sich nach Aufbringen eines geeignetes Katalysators ein katalytisches Festbett, das im Reaktionsbetrieb zu mindestens 85 Vol.-% mit Reaktionsmedium gefüllt ist und zugleich eine Kontaktfläche des Katalysators mit dem Reaktionsmedium von mindestens 2000 m$^2$ pro m$^3$ Volumen des katalytischen Festbetts aufweist. Bevorzugt ist das katalytische Festbett im Reaktionsbetrieb zu mindestens 90 Vol.-% mit Reaktionsmedium gefüllt, besonders bevorzugt zu 90 bis 95 Vol.-%. Die direkte Kontaktfläche des Katalysators mit dem Reaktionsmedium beträgt bevorzugt 2000 bis 12000 m$^2$ pro m$^3$ Volumen des katalytischen Festbetts, besonders bevorzugt 2300 bis 7500 m$^2$ pro m$^3$ Volumen des katalytischen Festbetts.

Die Trägerstruktur besteht aus Metallen ausgewählt aus den Elementen der 8., der 6. und der 1. Nebengruppe des Periodensystems der Elemente und Mischungen davon. Insbesondere eignen sich Metalle, die ausgewählt sind aus der Gruppe bestehend aus Eisen, Cobalt, Nickel, Kupfer, Silber und/oder Mischungen davon, da sich diese Metalle durch eine gute Verarbeitbarkeit, hohe mechanische Belastbarkeit und - bei geeigneter Verarbeitung - durch chemische Beständigkeit unter typischen Bedingungen einer Hydrierreaktion, sowie durch vertretbare Rohstoffkosten auszeichnen. Besonders bevorzugt sind Cobalt, Nickel, Kupfer und/oder Mischungen davon als Hauptbestandteile der Trägerstruktur.

Die Herstellung einer Trägerstruktur mit den erfindungsgemäßen Merkmalen aus den vorstehend genannten Metallen erfolgt in einem Templat-gestützten Herstellverfahren, da sich die Metalle bei einer erfindungsgemäßen Materialstegdicke im Bereich von 5 bis 25 $\mu$m nicht durch übliche Metallverarbeitungsverfahren stoffschlüssig stabil so verbinden lassen, dass eine Vernetzungsdichte von mindestens 3 mm$^{-3}$ entsteht. Zur Herstellung der Trägerstruktur wird in einem ersten Schritt ein organisches Templat aus einem geeigneten organischen Polymer erzeugt. Dieses Templat muss bereits die räumlichen Merkmale der herzustellenden metallischen Trägerstruktur aufweisen, nicht aber die geforderte mechanische Festigkeit zeigen. Insbesondere muß die Vernetzungsdichte im erfindungsgemäßen Bereich liegen. Techniken zur Herstellung solcher Templat-Strukturen aus organischen Polymeren sind dem Fachmann der Polymerchemie und Polymerverarbeitung bekannt. Entsprechend geeignete Template beispielsweise aus Polystyrol, Polyurethan, Polyethylen, Polypropylen, Polyethylenterephthalat und anderen modernen Polymeren sind im Stand der Technik bekannt und kommerziell verfügbar.

Auf das organische Templat wird durch Sputterbeschichtung eine dünne Schicht des Metalls, aus dem die Trägerstruktur aufgebaut werden soll, aufgebracht. Diese erste Schicht sollte flächig geschlossen, aber nur wenige Atomlagen dick sein. Typischerweise überschreitet die Dicke solcher Sputterbeschichtungen 0,15 $\mu$m nicht. Auch diese Sputterverfahren sind im Stand der Technik gut bekannt und etablierte industrielle Praxis. Zweck dieser Sputterbeschichtung ist es, das organische Templat in einen leitfähigen Zustand zu bringen. Auf das so vorbehandelte organische Templat wird das Metall, aus dem die Trägerstruktur aufgebaut werden soll, nach bekannten und industriell etablierten Verfahren galvanisch abgeschieden, bis eine Metallschichtdicke von nicht mehr als 30 $\mu$m erreicht ist. In einer anschließenden Wärmebehandlung wird das organische Templat rückstandslos thermolytisch entfernt. Je nach eingesetztem Polymer erfolgt eine pyrolytische Zersetzung des organischen Templats in Anwesenheit von Luftsauerstoff und in einem Temperaturbereich zwischen 300 und 750°C, bevorzugt zwischen 400 und 600°C und besonders bevorzugt zwischen 480 und 580°C. In einem zweiten Wärmebehandlungsschritt wird die so entstandene Trägerstruktur in einem Temperaturbereich von 750 bis 1100°C unter reduzierender Atmosphäre nachgetempert. Die Temperatur dieses zweiten Temperschrittes ist vom zum Aufbau der Trägerstruktur eingesetzten Material abhängig und nach der Schmelztemperatur des eingesetzten Metalls bzw. der eingesetzten Metalle zu wählen. Diese Temperatur darf $0{,}75 \cdot T_m$ mit $T_m$ = Schmelztemperatur der eingesetzten Metalle nicht überschreiten. Durch die Wärmebehandlung unter reduzierender Atmosphäre werden Metalloxide, die sich gegebenenfalls im ersten Wärmebehandlungsschritt gebildet haben können, wieder zu elementarem Metall reduziert und es wird ein stabiles metallisches Gefüge ausgebildet. Eventuell im ersten Wärmebehandlungsschritt unter Luftsauerstoff ausgebildete Fehl- und Störstellen im Metallgefüge werden zurückgebildet und eine für die mechanische Stabilität der resultierenden Trägerstruktur erforderliche Duktilität und Elastizität wiederhergestellt.

Die so erzeugte Trägerstruktur kann unter den im erfindungsgemäßen katalytischen Reaktor herrschenden Reaktionsbedingungen katalytisch inert sein. Es besteht aber auch die Möglichkeit, katalytisch wirksame Metalle bereits im Herstellprozess der metallischen Trägerstruktur zu inkludieren, beispielsweise durch entsprechende Abscheidezusätze im galvanischen Bad, das zum Aufbau der Materialstege auf dem organischen Templat verwendet wird. Gegebenenfalls müssen dann diese in die die Trägerstruktur aufbauenden Materialstege eingebrachten katalytisch wirksamen Elemente in einem weiteren Schritt "aktiviert" werden, beispielsweise durch ein Ätz- oder andere chemische Nachbehandlungsverfahren.

Bevorzugt ist die erfindungsgemäße Trägerstruktur katalytisch inert und dient als Tragkörper für einen geeigneten Katalysator, der für die Reaktion, die im erfindungsgemäßen katalytischen Reaktor durchgeführt werden soll, gezielt angepasst werden kann.

Der Katalysator kann in Form einer katalytisch aktiven Beschichtung auf die Trägerstruktur aufgebracht werden. Ähnlich wie bei in der Autoabgaskatalyse verwendeten monolithischen Substraten weist die erfindungsgemäße Trägerstruktur neben der dazu notwendigen Formstabilität durchgängige Hohlräume auf, durch die eine Beschichtungssuspension hindurchgesaugt oder gepumpt werden kann. Auch das Aufbringen einer Beschichtungssuspension in Tauchverfahren (sogenanntes "Dip Coating") oder in Sprühverfahren (sogenanntes "Spray Coating") ist möglich. Welches der im Stand der Technik grundsätzlich bekannten Aufbringverfahren zu bevorzugen ist, hängt einerseits von der Zusammensetzung und den Fließeigenschaften der Beschichtungssuspension, und andererseits von der tatsächlichen Struktur der als Tragkörper eingesetzten Trägerstruktur ab. Dip Coating weist die höchstmögliche Toleranz gegenüber variierenden Eigenschaften der Beschichtungssuspension auf und ist deshalb zur Beschichtung aller erfindungsgemäßen Trägerstrukturen geeignet.

Eine Katalysatorbeschichtung besteht aus überwiegend oxidischen Komponenten. Hauptbestandteil sind anorganische Trägeroxide mit sehr hohen spezifischen Oberflächen, die zwischen 50 und 200 m²/g Trägeroxid liegen. Auf dieser Oberfläche werden die katalytisch aktiven Komponenten verteilt. Diese anorganischen Trägeroxide haben im fertigen Katalysator mehrere Funktionen: Zum einen dienen sie dazu, die durch die erfindungsgemäße Trägerstruktur bereitgestellte makroskopische, d.h. geometrische Oberfläche, die im Kontext dieser Erfindung als Kontaktfläche des Katalysators mit dem Reaktionsmedium bezeichnet wird, in der mikroskopischen Ebene zu vergrößern. Zum anderen können sie ihrerseits in Wechselwirkung mit den zu hydrierenden Molekülen treten und so den Reaktionsverlauf beeinflussen. Insbesondere beeinflusst die Wahl des Trägeroxids die Selektivität komplexer Hydrierreaktionen, bei denen mehrere funktionelle Gruppen organischer Substratmoleküle mit Wasserstoff reagieren können. Des Weiteren stellen sie die mikroskopische Oberfläche bereit, auf der die katalytisch aktiven Komponenten verteilt werden. Sie bilden weiterhin eine Matrix, in der weitere Funktionskomponenten und Zuschlagstoffe verteilt werden können, die zur "Einstellung" spezieller Funktionen des Katalysators bei dessen Adaption auf eine spezifische Anwendung dienen.

Bevorzugt werden anorganische Oxide ausgewählt aus der Gruppe bestehend aus Aluminiumoxid, Siliziumdioxid, Titanoxid und Mischungen davon als Trägeroxide verwendet.

Als katalytisch aktive Komponenten werden Übergangsmetalle eingesetzt, die bevorzugt ausgewählt sind aus der Gruppe bestehend aus Eisen, Ruthenium, Osmium, Cobalt, Rhodium, Iridium, Nickel, Palladium, Platin Kupfer, Silber, Gold und Mischungen davon. Für Hydrierreaktionen besonders bevorzugte katalytische Komponenten sind Übergangsmetalle ausgewählt aus der Gruppe bestehend aus Eisen, Ruthenium, Cobalt, Rhodium, Iridium, Nickel, Palladium, Platin, Kupfer, Gold und Mischungen davon.

Als weitere Funktionskomponenten und Zuschlagstoffe kann die katalytische Beschichtung anorganische Oxide enthalten, bevorzugt ausgewählt aus den Oxiden der Erdalkalimetalle, den Oxiden der Übergangsmetalle, der Seltenen Erden, aus den Oxiden des Aluminiums und Galliums, den Oxiden des Siliziums, Germaniums und des Zinns und/oder Mischungen davon.

Der Anteil eines durch Beschichtung auf die bevorzugt katalytisch inerte, erfindungsgemäße Trägerstruktur aufgebrachten Katalysator im erfindungsgemäßen katalytischen Reaktor liegt bei 2 bis 500 kg/m$^3$, bezogen auf das Volumen des katalytischen Festbetts, bevorzugt bei 2 bis 100 kg/m$^3$, bezogen auf das Volumen des katalytischen Festbetts. Er enthält, bezogen auf die Gesamtmenge der den Katalysator bildenden katalytischen Beschichtung, bevorzugt 60 bis 99,8 Gew.-% Trägeroxide, 0,2 bis 10 Gew.-% katalytisch aktive Komponenten und gegebenenfalls Zuschlagsstoffe und Funktionskomponenten (Rest).

Um den Katalysator auf die erfindungsgemäße Trägerstruktur aufzubringen, wird eine Beschichtungssuspension durch Einbringen der Bestandteile in Wasser hergestellt. Das Aufbringen der katalytischen Komponenten auf die Trägeroxide erfolgt dabei entweder durch vorhergehende Imprägnierung der Trägeroxide mit entsprechenden Metallsalzlösungen (Precursor-Lösungen) oder durch Zugabe von Precursor-Lösungen direkt in die Beschichtungssuspension und gegebenenfalls Auffällung oder chemisch induzierte Abscheidung oder Zersetzung der Precursor-Verbindung auf das/die bereits suspendierte/n Trägeroxid/e. Auch Funktionskomponenten und Zuschlagstoffe können auf diese Weise eingebracht oder direkt als oxidische Feststoffe hinzugefügt werden. Alternativ können alle aus löslichen Precursoren resultierenden Bestandteile des Katalysators nach Aufbringen der Trägeroxide auf die erfindungsgemäße Trägerstruktur durch Nachimprägnierverfahren hinzugefügt werden. Die Wahl der Präparationsmethode wird von der Zielzusammensetzung und den einzustellenden Eigenschaften des resultierenden Katalysators bestimmt.

Um eine gute Haftung des Katalysators auf der erfindungsgemäßen Trägerstruktur zu gewährleisten, kann der Zusatz von haftvermittelnden Substanzen oder Bindern erforderlich sein, die vor Beschichtung mit der Katalysatorsuspension auf die erfindungsgemäße Trägerstruktur aufzubringen sind.

Die mit Katalysatorsuspension beschichtete Trägerstruktur wird an Luft kalziniert, um eine Fixierung des Katalysators auf der Trägerstruktur zu erreichen und so das erfindungsgemäße Festbett zu erzeugen, das dann in den katalytischen Reaktor eingebracht wird.

Sind Cobalt, Nickel, Kupfer und/oder Mischungen davon Hauptbestandteile der erfindungsgemäßen Trägerstruktur bzw. besteht die Trägerstruktur aus Cobalt, Nickel, Kupfer und/oder Mischungen davon, so wird vor der Beschichtung mit der Katalysatorsuspension bevorzugt eine dünne Aluminiumoxidschicht als haftvermittelnde Schicht direkt auf dem erfindungsgemäßen Träger erzeugt. Hierzu wird die erfindungsgemäße Trägerstruktur zunächst mit einem Haftvermittler versehen, der das Aufbringen einer dünnen Aluminiumschicht ermöglicht. Als Haftvermittler eignen sich organische Verbindungen, die die Haftung zwischen Metallen und organischen Materialien verbessern und die bevorzugt ausgewählt werden aus der Gruppe bestehend aus Polyvinylpyrrolidon (PVP), Wachse, Ethylenglykol, Polyethylenimin und Gemischen dieser Verbindungen. Besonders bevorzugt wird eine wässrige Polyethylenimin-Lösung eingesetzt. Das Aufbringen des Haftvermittlers auf die erfindungsgemäße Trägerstruktur erfolgt bevorzugt durch Behandlung der erfindungsgemäßen Trägerstruktur mit einer Lösung, die 0,5 bis 10 Gew.-% des Haftvermittlers enthält, bei Raumtemperatur. Bevorzugt hat die Lösung einen Gehalt von 1 bis 8 Gew.-% Haftvermittler, besonders bevorzugt von 2 bis 7 Gew.-% Haftvermittler. Die Haftvermittlerlösung kann durch Durchpumpen oder Durchsaugen auf die erfindungsgemäße Trägerstruktur aufgebracht werden. Bevorzugt wird die Haftvermittlerlösung auf die erfindungsgemäße Trägerstruktur aufgesprüht oder die Trägerstruktur wird in die Haftvermittlerlösung eingetaucht. Nach dem Aufbringen des Haftvermittlers auf die erfindungsgemäße Trägerstruktur wird Aluminiumpulver auf die Trägerstruktur aufgebracht. Hierzu wird bevorzugt ein feinkörniges Aluminiumpulver mit einer Korngröße nicht über $d_{99}$ = 200 μm und einer engen Korngrößenverteilung aufgebracht. Besonders bevorzugt liegt der dso-Wert der Korngrößenverteilung des Aluminiumpulvers im Bereich 20 bis 70 μm bei einem dgg-Wert nicht über 150 μm. Auch das aufzubringende Aluminiumpulver kann mit einem Haftvermittler versehen sein, wobei sich ebenfalls die bereits vorstehend erwähnten haftvermittelnden Substanzen eignen. Das Aluminiumpulver wird auf die erfindungsgemäße Trägerstruktur in möglichst gleichmäßiger Verteilung aufgebracht. Dies kann zum Beispiel nach Suspendierung oder Fluidisierung des Pulvers in einem geeigneten Medium durch Eintauchen der Trägerstruktur in die resultierende Pulvermatrix oder durch Aufsprühen des entsprechend vorbereiteten Pulvers bzw. einer Suspension des Pulvers auf die erfindungsgemäße Trägerstruktur erfolgen.

Es ist auch möglich, Aluminiumschichten durch Sputter-Techniken oder Abscheidungen aus der Gasphase nach CVD-Verfahren (CVD = Chemical Vapor Deposition) aufzubringen. Je nach räumlicher Ausdehnung der Trägerstruktur können solche Verfahren mit sehr viel Aufwand und entsprechend hohen Kosten verbunden sein.

Nach dem Aufbringen des Aluminiums wird die erfindungsgemäße Trägerstruktur einer Wärmebehandlung unter Luft (Kalzinierung) zur Oxidation des Aluminiums und Ausbildung einer Aluminiumoxid-Schicht unterzogen. Die Kalzinationstemperaturen liegen bevorzugt zwischen 200°C und 1200°C, besonders bevorzugt zwischen 300°C und 1000°C und ganz besonders bevorzugt zwischen 350°C und 750°C.

Eine so behandelte erfindungsgemäße Trägerstruktur lässt sich besonders gut mit einem Katalysator beschichten. Die auf der Oberfläche der Trägerstruktur erzeugte "Aluminiumoxid-Haut" sorgt für eine ausgesprochen gute Anbindung der Trägeroxide des Katalysators und bewirkt eine lange Haltbarkeit und Lebensdauer sowie eine ausgesprochen hohe mechanische Stabilität, insbesondere Abriebstabilität, des katalytischen Festbetts im erfindungsgemäßen katalytischen Reaktor auch im Dauereinsatz über mehrere tausend Betriebsstunden.

Sind Cobalt, Nickel, Kupfer und/oder Mischungen davon Hauptbestandteile der erfindungsgemäßen Trägerstruktur bzw. besteht die Trägerstruktur aus Cobalt, Nickel, Kupfer und/oder Mischungen davon, so wird, wenn der erfindungsgemäße katalytische Reaktor als Hydrierreaktor eingesetzt werden soll, bevorzugt ein aktivierter Metallkatalysator auf die Trägerstruktur aufgebracht. Hierzu wird auf die erfindungsgemäße Trägerstruktur zunächst ein Haftvermittler aufgebracht. Als Haftvermittler eignen sich organische Verbindungen, die die Haftung zwischen Metallen und organischen Materialien verbessern und die bevorzugt ausgewählt werden aus der Gruppe bestehend aus Polyvinylpyrrolidon (PVP), Wachse, Ethylenglykol, Polyethylenimin und Gemischen dieser Verbindungen. Besonders bevorzugt wird eine wässrige Polyethylenimin-Lösung eingesetzt. Das Aufbringen des Haftvermittlers auf die erfindungsgemäße Trägerstruktur erfolgt bevorzugt durch Behandlung der erfindungsgemäßen Trägerstruktur mit einer Lösung, die 0,5 bis 10 Gew.-% des Haftvermittlers enthält, bei Raumtemperatur. Bevorzugt hat die Lösung einen Gehalt von 1 bis 8 Gew.-% Haftvermittler, besonders bevorzugt von 2 bis 7 Gew.-% Haftvermittler. Die Haftvermittlerlösung kann durch Durchpumpen oder Durchsaugen auf die erfindungsgemäße Trägerstruktur aufgebracht werden. Bevorzugt wird die Haftvermittlerlösung auf die erfindungsgemäße Trägerstruktur aufgesprüht oder die Trägerstruktur in die Haftvermittlerlösung eingetaucht. Nach dem Aufbringen des Haftvermittlers auf die erfindungsgemäße Trägerstruktur wird Aluminiumpulver auf die Trägerstruktur aufgebracht. Hierzu wird bevorzugt ein feinkörniges Aluminiumpulver mit einer Korngröße nicht über $d_{99}$ = 200 $\mu$m und einer engen Korngrößenverteilung aufgebracht. Besonders bevorzugt liegt der dso-Wert der Korngrößenverteilung des Aluminiumpulvers im Bereich 20 bis 70 $\mu$m bei einem dgg-Wert nicht über 150 $\mu$m. Auch das aufzubringende Aluminiumpulver kann mit einem Haftvermittler versehen sein, wobei sich ebenfalls die bereits vorstehend erwähnten haftvermittelnden Substanzen eignen. Bevorzugt werden teilsynthetische Wachse eingesetzt, die einen Tropfpunkt im Temperaturbereich 120°C bis 180°C zeigen und dem Aluminiumpulver mit einem Anteil von 1 bis 10 Gew.-% zugesetzt werden. Das Aluminiumpulver wird auf die erfindungsgemäße Trägerstruktur in möglichst gleichmäßiger Verteilung aufgebracht. Dies kann zum Beispiel nach Suspendierung oder Fluidisierung des Pulvers in einem geeigneten Medium durch Eintauchen der Trägerstruktur in die resultierende Pulvermatrix oder Aufsprühen des entsprechend vorbereiteten Pulvers auf die erfindungsgemäße Trägerstruktur erfolgen.

Nach der Beschichtung mit Aluminiumpulver wird die erfindungsgemäße Trägerstruktur einer Wärmebehandlung zur Einlegierung des Aluminiums in die Materialstege unterzogen. Die Wärmebehandlung erfolgt unter Ausschluss von Luftsauerstoff unter Inertgas-Atmosphäre in einem Temperaturbereich von 500 bis 1000 °C, bevorzugt von 600 bis 800 °C. Dabei werden zunächst Feuchtigkeit und organische Reststoffe aus dem vorhergehenden Beschichtungsprozess entfernt. Anschließend wird Aluminium mindestens teilweise verflüssigt und in die erfindungsgemäße Trägerstruktur einlegiert. Durch den Ausschluss von Luftsauerstoff wird die Ausbildung oxidischer Schichten verhindert, die sich in einem sich anschließenden Prozess zur Erzeugung des aktivierten Metallkatalysators auf der Oberfläche des erfindungsgemäßen Trägers ausgesprochen störend auswirken würden.

Während der Wärmebehandlung entstehen an der Oberfläche der Materialstege des erfindungsgemäßen Trägers intermetallische Phasen mit Aluminium. Sind Cobalt, Nickel, Kupfer und/oder Mischungen davon Hauptbestandteile der erfindungsgemäßen Trägerstruktur bzw. besteht die Trägerstruktur aus Cobalt, Nickel, Kupfer und/oder Mischungen davon, so werden intermetallische Phasen der Zusammensetzung $MeAl_x$ ausgebildet, wobei Me Cobalt, Nickel oder Kupfer ist und der stöchiometrische Faktor x Werte zwischen 0,33 und 3 annimmt. Aus den entstehenden intermetallischen Phasen $MeAl_x$ mit $x \geq 1$ kann Aluminium chemisch herausgelöst werden, so dass auf der Oberfläche der Materialstege des erfindungsgemäßen Trägers ein offenporiger Metallschwamm entsteht, der eine hohe katalytische Aktivität in Hydrierreaktionen aufweist. Dieser - im Falle der Erfindung - auf den metallischen Materialstegen geträgerte, d. h. mit den Materialstegen fest verbundene Metallschwamm ist ein aktivierter Metallkatalysator für Hydrierreaktionen.

Die Erzeugung dieses aktivierten Metallkatalysators erfolgt durch eine sogenannte "Aktivierung" der zuvor erzeugten erfindungsgemäßen Trägerstruktur mit aufgebrachter Beschichtung aus intermetallischen Phasen des Typs $MeAl_x$, $0,33 \leq x \leq 3$ und Me ausgewählt aus Cobalt, Nickel, Kupfer und/oder Mischungen davon. Hierzu wird das Material mit wässrigen basischen Lösungen behandelt, bevorzugt mit Alkalihydroxidlösungen ausgewählt aus der Gruppe bestehend aus Natriumhydroxid, Kaliumhydroxid oder Lithiumhydroxid. Besonders bevorzugt ist wässrige Natriumhydroxidlösung. Die Konzentration dieser zur Katalysatorherstellung eingesetzten wässrigen Alkalihydroxidlösung kann zwischen 0,1 und 60 Gew. -% liegen. Bevorzugt erfolgt das Herauslösen des Aluminiums - dieser Schritt wird auch als "Laugung" bezeichnet - mit einer 5 bis 40 Gew.-%igen, besonders bevorzugt 5 bis 25 Gew.- %igen wässrigen Natriumhydroxidlösung bei einer Temperatur von 20 bis 100°C, bevorzugt bei 40 bis 85°C, besonders bevorzugt bei 50 bis 80°C. Die dabei anzuwendenden Laugungszeiten, d.h. die Reaktionszeiten der Alkalihydroxidlösung mit dem mit Aluminium enthaltenden intermetallischen Phasen modifizierten erfindungsgemäßen Träger, hängen außer von den sonstigen, vorstehend benannten Reaktionsbedingungen vom einzustellenden Aluminiumgehalt im katalytischen Festbett ab und können zwischen 2 und 240 Minuten liegen. Der Aluminiumgehalt im katalytischen Festbett hat Einfluss auf die katalytische Leistung und Lebensdauer desselben, insbesondere auf die Hydrieraktivität und auf die chemische Stabilität im Reaktionsmedium. Als erste allgemeine Faustregel kann davon ausgegangen werden, dass die Hydrieraktivität des erfindungsgemäßen katalytisch aktiven Festbetts umso höher ist, je geringer der Restaluminiumgehalt ist. Bevorzugt werden Restaluminiumgehalte des erfindungsgemäßen Festbetts eingestellt, die zwischen 2 und 20 Gew.-%, besonders bevorzugt zwischen 5 und 15 Gew.-%, bezogen auf die Gesamtmasse des Festbetts, liegen. Als zweite allgemeine Faustregel kann davon ausgegangen werden, dass die chemische Stabilität des erfindungsgemäßen Festbetts insbesondere in Prozessen, die bei pH-Werten des Reaktionsmediums oberhalb von 8 und Temperaturen oberhalb von 120°C betrieben werden, umso höher ist, je geringer der Restaluminiumgehalt ist. Bevorzugt werden Restaluminiumgehalte des erfindungsgemäßen Festbetts eingestellt, die zwischen 2 und 17 Gew.-%, besonders bevorzugt zwischen 3 und 12 Gew.-%, bezogen auf die Gesamtmasse des Festbetts, liegen.

Der auf der erfindungsgemäßen Trägerstruktur erzeugte aktive Metallkatalysator kann durch eine Nachdotierung mit weiteren Metallen modifiziert werden, wobei die Metalle bevorzugt auszuwählen sind aus den Übergangsmetallen. Zur Nachdotierung wird die Trägerstruktur mit dem darauf erzeugten katalytisch aktiven Metallschwamm mit einer bevorzugt wässrigen Lösung des aufzubringenden Dotierungselements oder der aufzubringenden Dotierungselemente behandelt. Die zu verwendende wässrige Lösung des aufzubringenden Dotierungselements bzw. der aufzubringenden Dotierungselemente muss einen pH-Wert, der gleich oder größer als 7 ist, aufweisen, um den Metallschwamm nicht zu schädigen. Der Lösung des aufzubringenden Dotierungselementes oder der aufzubringenden Dotierungselemente kann eine chemisch reduktiv wirkende Komponente zugegeben werden, um das gelöste Dotierungselement bzw. die gelösten Dotierungselemente auf dem Metallschwamm reduktiv abzuscheiden. Bevorzugte Dotierungselemente zur Modifizierung des auf der erfindungsgemäßen Trägerstruktur erzeugten aktiven Metallkatalysators sind ausgewählt aus der Gruppe bestehend aus Molybdän, Platin, Palladium, Rhodium, Ruthenium, Kupfer und Mischungen davon.

Der erfindungsgemäße katalytische Reaktor enthält ein katalytisches Festbett umfassend einen Träger und einen Katalysator, wobei der Träger eine spezielle räumliche Struktur aufweist, die aufgebaut ist aus Materialstegen, deren Dicke im Bereich von 5 bis 25 $\mu$m liegt, und die eine Vernetzungsdichte von mindestens 3 mm$^{-3}$ aufweist. Bevorzugt weisen die die Trägerstruktur ausbildenden Materialstege eine Dicke von 5 bis 15 $\mu$m auf. Die Vernetzungsdichte beträgt bevorzugt 3 bis 100 mm$^{-3}$ und ganz besonders bevorzugt 10 bis 65 mm$^{-3}$.

Im erfindungsgemäßen katalytischen Festbett wirken die offenen, vom Reaktionsmedium ohne größeren Strömungswiderstand durchströmbaren Bereiche und die große Kontaktfläche des aufgebrachten Katalysators mit dem Reaktionsmedium in synergistischer Weise zusammen und bewirken viele technischen Vorteile des erfindungsgemäßen Reaktors.

Großtechnische Hydrierprozesse werden bei erhöhtem Druck und erhöhter Temperatur in Anwesenheit mindestens stöchiometrischer Mengen Wasserstoff durchgeführt. Da Hydrierreaktionen exotherm sind, ein zu hoher Anstieg der Temperatur im katalytischen Festbett nach dem Le Chatelier'schen Prinzip zur Verschiebung der chemischen Reaktionsgleichgewichte auf die Eduktseite und somit zu Ausbeuteminderungen im Prozess führen, sind Maßnahmen zur Temperaturregulierung im Reaktor zentraler Bestandteil vieler bestehender Prozesse und erfordern nicht selten ein auf die Zielreaktion abgestimmtes, oft hoch spezielles Reaktordesign. Das erfindungsgemäße katalytische Festbett zeichnet sich dadurch aus, dass mindestens 85 Vol.-% seines Volumens im Reaktionsbestrieb mit Reaktionsmedium gefüllt ist und ohne großen Strömungswiderstand auch mit höheren Strömungsgeschwindigkeiten durchströmt werden kann. Zugleich wird eine ausgesprochen hohe Kontaktfläche des Katalysators bereitgestellt, so dass hinreichende Kontakte der zu hydrierenden Moleküle mit dem Katalysator auch bei hohen Strömungsgeschwindigkeiten gegeben sind und hohe Verweilzeiten meist nicht notwendig sind. Damit kann ein wesentlicher Teil der Temperaturregulierung im Reaktor über das Reaktionsmedium erfolgen, das einerseits für den Antransport der zur Ingangsetzung der chemischen Reaktion am Katalysator benötigten Wärmemengen und andererseits zum Abtransport von überschüssigen Wärmemengen, die aus der Exothermie der Reaktion resultieren, genutzt wird. Die Temperatur im katalytischen Festbett ist somit im Wesentlichen über die Strömungsgeschwindigkeit sehr robust einstellbar. Insbesondere bei flüssigen Reaktionsmedien, die eine hinreichende Wärmekapazität aufweisen, entfällt damit in den meisten Hydrieranwendungen die Notwendigkeit aufwändiger Einbauten zum Wärmeaustausch oder zur Wärmeregulierung im Reaktor. Die für Festbettmaterial nach dem Stand der Technik üblichen lokalen "Wärmenester", die infolge der Anwesenheit schlecht durchströmter Bereiche der Festbettschüttungen nach dem Stand der Technik im großtechnischen Bereich zu Ausbeute- und Selektivitätsverlusten führen können, treten aufgrund der speziellen Struktur des erfindungsgemäßen katalytischen Festbetts nicht auf. Ein erfindungsgemäßer katalytischer Reaktor ist daher im einfachsten Falle ein durchströmtes Rohr bzw. ein durchströmter, zylinderförmiger Druckbehälter, in dem sich das erfindungsgemäße katalytische Festbett befindet, welches bevorzugt auf einem Siebboden oder einer vergleichbaren Halterung gelagert wird. Da die genannten Vorteile besonders bei Hydrierprozessen in großtechnischem Maßstab zutage treten, enthält ein erfindungsgemäßer katalytischer Reaktor bevorzugt ein erfindungsgemäßes katalytisches Festbett mit einem Volumen V zwischen 0,5 und 100 m$^3$, besonders bevorzugt zwischen 1 und 50 m$^3$ und ganz besonders bevorzugt zwischen 2 und 25 m$^3$.

Die besondere räumliche Struktur der erfindungsgemäßen Trägerstruktur im katalytischen Festbetts hat weiterhin zur Folge, dass das Reaktionsmedium das Festbett im erfindungsgemäßen katalytischen Reaktor durchströmen kann, ohne dass ein hoher Strömungswiderstand zu verzeichnen ist. Hohe Strömungswiderstände führen einerseits zu hohen Druckverlusten des durchströmenden Gases, die durch einen entsprechend hohen Vordruck überwunden werden müssen. Die Verwendung des erfindungsgemäßen katalytischen Reaktors ermöglicht somit Absenkungen des Wasserstoff-Vordrucks und somit Kosten- und Energie-Einsparungen in der Hydrieranlage. Darüber hinaus werden mit verringertem Strömungswiderstand Bewegungen im katalytischen Festbett während des Betriebes und infolgedessen das Ablösen von Katalysatormaterial durch mechanischen Abrieb vermindert. Durch mechanischen Abrieb erzeugtes Feinmaterial aus dem Katalysatorfestbett sammelt sich am Reaktorboden und kann insbesondere bei in Rieselbett-Fahrweise betriebenen Reaktoren nach dem Stand der Technik zu Kontaminationen nachgelagerter Anlagenteile führen. Verunreinigungen von Rohrleitungen und Ventilblockaden können die Folge sein, die unter Umständen auch die Betriebssicherheit der Anlage gefährden können. Durch den Einsatz des erfindungsgemäßen katalytischen Reaktors werden Reinigungs- und Wartungsintervalle verlängert, Betriebsstillstandszeiten reduziert und die Betriebssicherheit der Gesamtanlagen erhöht.

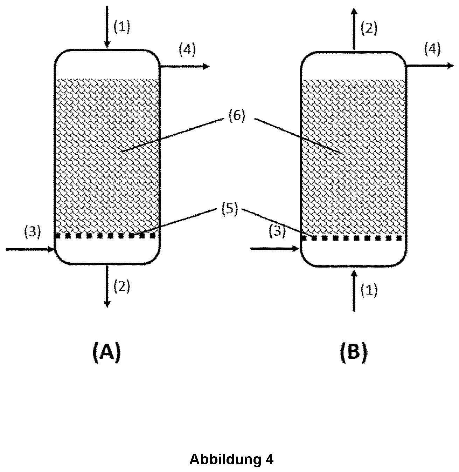

Die besondere räumliche Struktur der erfindungsgemäßen Trägerstruktur im katalytischen Festbett bewirkt im erfindungsgemäßen katalytischen Reaktor weiterhin Verbesserungen des Stofftransports insbesondere dann, wenn es sich um einen erfindungsgemäßen katalytischen Reaktor handelt, der nach dem Prinzip des Sumpfreaktors gemäß Abbildung 4 (B) ausgeführt ist. Die besondere mikroskopische Struktur des hoch vernetzten und trotzdem offenen erfindungsgemäßen Trägers beeinflusst die makroskopische Fluiddynamik im Reaktor, bewirkt im Vergleich zu Blasensäulenkonzepten nach dem Stand der Technik grundsätzlich eine Erhöhung des integralen Gasgehalts und verbessert die radiale Verteilung des Wasserstoffs im Reaktor. Infolgedessen wird der Antransport des Wasserstoffs an den Katalysator verbessert. Dadurch können bei Verwendung des erfindungsgemäßen katalytischen Reaktors erhöhte Ausbeuten bei gleichbleibendem Energieeintrag oder vergleichbare Ausbeuten bei vermindertem Energieeintrag erzielt werden. Wie groß der erzielbare technische Effekt ist, ist vom zu hydrierenden Stoffsystem und bei "Drop-In-Lösungen" zusätzlich von der Reaktorgesamtgeometrie und der Infrastruktur der Gesamthydrieranlage abhängig.

Der erfindungsgemäße katalytische Reaktor enthält ein katalytisches Festbett umfassend einen Träger und einen Katalysator, wobei der Träger eine spezielle räumliche Struktur aufweist, die aufgebaut ist aus Materialstegen, deren Dicke im Bereich von 5 bis 25 $\mu$m liegt, und eine Vernetzungsdichte von mindestens 3 mm$^{-3}$ aufweist. Bevorzugt weisen die die Trägerstruktur ausbildenden Materialstege eine Dicke von 5 bis 15 $\mu$m auf. Die Vernetzungsdichte beträgt bevorzugt 3 bis 100 mm$^{-3}$ und ganz besonders bevorzugt 10 bis 65 mm$^{-3}$. Die erfindungsgemäße Trägerstruktur besteht aus einem Material, das über eine hohe mechanische Belastbarkeit und Festigkeit verfügt, hinreichend thermisch beständig und druckfest ist und eine hohe chemische Beständigkeit aufweist. Die erfindungsgemäße Trägerstruktur weist Trägerdruckfestigkeiten im Bereich von 0,5 bis 20 kPa/mm$^3$ auf, bevorzugt 1 bis 15 kPa/mm$^3$ und besonders bevorzugt 1,5 bis 7,5 kPa/mm$^3$. Die Trägerstruktur besteht aus Metallen, die ausgewählt sind aus den Elementen der 8., der 6. und der 1. Nebengruppe des Periodensystems der Elemente und Mischungen davon, und besonders bevorzugt aus Metallen, die ausgewählt sind aus der Gruppe bestehend aus Eisen, Cobalt, Nickel, Kupfer, Silber und/oder Mischungen davon. Ganz besonders bevorzugt sind Cobalt, Nickel, Kupfer und/oder Mischungen davon Hauptbestandteile der Trägerstruktur.

Aufgrund des hohen Vernetzungsgrades und der geringen Dicke der Materialstege der Trägerstruktur im Bereich von 5 bis 25 $\mu$m zeichnet sich das im erfindungsgemäßen katalytischen Reaktor befindliche katalytische Festbett durch ein sehr geringes Füllgewicht aus. Unter Füllgewicht wird das Gewicht des katalytischen Festbetts bezogen auf dessen Volumen verstanden. Typischerweise beträgt das Füllgewicht des im erfindungsgemäßen katalytischen Reaktor befindlichen Festbetts zwischen 0,1 und 1 kg/m3, bevorzugt 0,2 bis 0,8 kg/m3 und ganz besonders bevorzugt 0,3 bis 0,7 kg/m3. Infolgedessen ist das Gesamtgewicht des erfindungsgemäßen katalytischen Reaktors im Vergleich zu üblichen bekannten Reaktoren auch bei großen Reaktorvolumina von bis zu 100 m$^3$ erheblich geringer. Das ermöglicht Material- und somit Kosteneinsparungen bei der Konstruktion von Reaktorhaltekonstruktionen und Reaktorpratzen.

**Beispiele**

Um nachzuweisen, dass durch die erfindungsgemäßen Reaktoren der typische Zielkonflikt beim Betrieb von Reaktoren mit klassischen Schüttgütern aufgelöst wird, d.h. dass also mit den erfindungsgemäßen Reaktoren eine möglichst große Kontaktfläche zwischen Reaktionsmedium und Träger bei gleichzeitiger Minimierung hoher Strömungswiderstände (Minimierung des Druckverlusts über dem katalytischen Festbett), erreicht werden kann, werden die Ergebnisse von Druckverlustmessungen an einem erfindungsgemäßen katalytischen Reaktor vorgelegt.

Bereitstellung eines erfindungsgemäßen katalytischen Reaktors:

Zum Aufbau einer erfindungsgemäßen Trägerstruktur wurden acht kommerziell erhältliche, zylindrische Nickelschaumkörper mit einem Durchmesser von 80 Millimetern und einer Länge von 250 Millimetern, die eine Porosität von 95 %, eine Porengröße von 580 μm und eine Dichte von 742 kg/m3 aufwiesen, durch Eintauchen in eine wässrige Binderlösung enthaltend 2,5 Gew.-% hochmolekulares Polyethylenimin-Homopolymer bebindert und anschließend mit einem wachshaltigen Aluminiumpulver (enthaltend 3 Gew.-% Ceratan7080-Wachs) beschichtet, dessen Partikelgrößenverteilung einen dgg-Wert von 63 μm aufwies. Das resultierende Gewichtsverhältnis von aufgebrachtem Aluminiumpulver zu Nickelgrundschaumkörper lag bei 0,27. Die so erhaltenen Körper wurden in Sauerstoff-freier Stickstoff-Atmosphäre über einen Zeitraum von 10 Minuten auf 680°C aufgeheizt, die Temperatur wurde über ca. eine Minute gehalten. Dann wurden die Schaumkörper auf ca. 200°C "abgeschreckt" und anschließend auf Raumtemperatur abgekühlt. Bei dieser thermischen Behandlung wurde Aluminium unter Bildung oberflächlicher intermetallischer Nickel-Aluminium-Phasen in den Nickelschaumkorpus einlegiert. Die optische Auswertung von REM-Aufnahmen an im Querschliff eingebetteten Proben zeigte, dass im Inneren des Nickelschaumkorpus Stege aus reinem Nickel mit einer Dicke von 10 μm verblieben. Die so entstandene erfindungsgemäße Trägerstruktur wies eine Vernetzungsdichte von 30 mm$^{-3}$ auf.

Aus den oberflächlich aufgebrachten intermetallischen Nickel-Aluminium-Phasen wurde im nächsten Schritt ein aktivierter Metallkatalysator erzeugt. Hierzu wurden die in den intermetallischen Phasen enthaltenen Aluminiumanteile durch Behandlung mit einer 10-Gew.-%igen Natronlauge aus den intermetallischen Phasen herausgelöst. Dazu wurden die vorstehend erzeugten Trägerstrukturen in 10 Gew.-%iger Natronlauge im Laufe von 30 Minuten auf 55°C aufgeheizt und ca. 30 Minuten bei dieser Temperatur mit Natronlauge behandelt. Anschließend wurde die Lauge entfernt, und die Trägerstrukturen wurden ca. eine Stunde lang mit Wasser gewaschen.

Zum Aufbau des erfindungsgemäßen katalytischen Reaktors wurden die so erzeugten acht katalytischen Festbetten in ein Glasrohr mit einem Innendurchmesser von 80 Millimetern und eine Länge von 2000 Millimetern eingebracht und mittels Halteplatte unten und Siebgitter oben fixiert. Das Einbringen erfolgte so, dass die acht Festbettkörper fugenlos übereinandergestapelt und fixiert waren, fest an der inneren Glaswand anlagen und sich nicht gegeneinander verschieben konnten, so daß eine Lückenbildung zwischen den Einzelkörpern ausgeschlossen war. An das Glasrohr wurde mittels Schliffsystem ein Zulaufstutzen im Sumpf und ein Ablaufstutzen im Kopf angebracht.

Das so erzeugte katalytische Festbett wies ein vom Reaktionsmedium durchströmbares Volumen von 92,1 Vol.-% und eine Kontaktfläche des Katalysators mit dem Reaktionsmedium von 4997 m$^2$ pro m$^3$ Volumen des katalytischen Festbetts auf.

Druckverlustmessungen:

Im so erzeugten erfindungsgemäßen katalytischen Reaktor wurde der Druckverlust über dem katalytischen Festbett mit Medien zweier unterschiedlicher Viskositäten bei unterschiedlichen Durchflußgeschwindigkeiten bestimmt. Dazu wurde einerseits Wasser (Dichte: 1,015 g/ml; Viskosität: 20 mPas) als Testmedium eingesetzt, andererseits Ethylenglykol (Dichte: 1,1018 g/ml; Viskosität: 69 mPas). Zur Druckverlust-Messung wurde das Testmedium dem erfindungsgemäßen Reaktor über den Zulauf im Sumpf mit unterschiedlichen Durchflußgeschwindigkeiten zugeführt. Der Differenzdruck über dem katalytischen Festbett wurde mittels Druckaufnehmern im Ein- und Ausgang des Reaktors bestimmt.

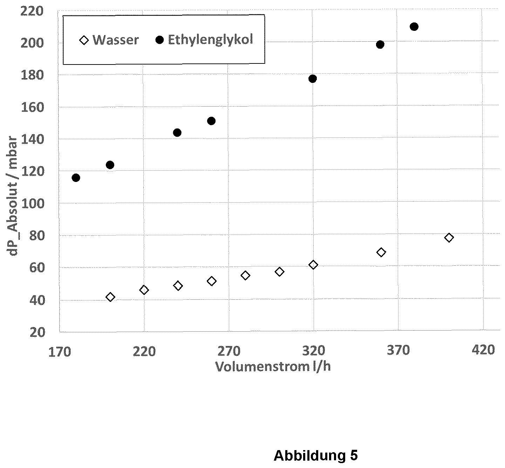

Die Ergebnisse sind in Abbildung 5 dargestellt.

Vergleich zum Stand der Technik:

Vergleichsdaten zu katalytischen Festbetten nach dem Stand der Technik wurden per Simulationsrechnung erhalten. Es wurde eine theoretische Simulation des Druckverlustes über einem gepackten Festbett aus nicht porösen Schüttgutpartikeln mit einer quaderförmigen Geometrie der Maße 4 × 4 × 2 Millimeter durchgeführt, wobei das aus Schüttgut aufgebaute Festbett einen Durchmesser von 80 Millimetern und eine Länge von 2000 Millimetern hatte. Es wurden nicht poröse Schüttgutpartikel als Vergleichsmaterial zum Stand der Technik zugrunde gelegt, da handelsübliche Katalysatorkörper nach dem Stand der Technik, die als "geschüttete" Katalysatorbetten in Reaktoren eingebracht werden, vom Reaktionsmedium nur äußerlich umströmt werden. Die innere Porosität der Schüttgutpartikel beeinflußt zwar Stofftransportlimitierungen im Reaktionsgeschehen, hat aber auf den über dem Katalysatorbett zu beobachtenden Druckverlust in der Regel keinen signifikanten Einfluß.

Die Berechnung des Druckverlusts über der Schüttung erfolgte mit Hilfe der Ergun-Gleichung (Quelle: Fluid flow through packed columns. Ergun, Sabri. 1952, Chem. Eng. Prog. , S. 48.):

$$\Delta p = \frac{150 \mu L}{D_p^2} \frac{(1-\epsilon)^2}{\epsilon^3} v_s + \frac{1,75\, L\, \rho}{D_p} \frac{(1-\epsilon)}{\epsilon^3} v_s |v_s|$$

Hierin ist:

| | |
|---|---|
| $\epsilon$ | Porosität |
| $\mu$ | Fluidviskosität |
| $\rho$ | Fluiddichte |
| $v_s$ | Fluidgeschwindigkeit |
| $D_p$ | Äquivalenter Durchmesser |
| $L$ | Rohrlänge |
| $\Delta p$ | Druckverlust |

Diese Gleichung besteht aus einem laminaren und turbulenten Termanteil, die je nach Strömungsregime über die jeweiligen Flussparameter anders gewichtet werden. Zur Beschreibung nicht poröser Partikel, die nur extern von der Flüssigkeit bzw. Gas umströmt werden, eignet sich die Ergun-Gleichung zur Druckverlustvorhersage, wobei der äquivalente Durchmesser bei quaderförmigen Partikeln wie folgt berechnet wird:

$$D_p = \sqrt[3]{\frac{6 \cdot a \cdot b \cdot c}{\pi}}$$

| | |
|---|---|
| $D_p$ | Äquivalenter Durchmesser für Ergungleichung |
| $a$ | Breite des Partikelquaders |
| $b$ | Länge des Partikelquaders |
| $c$ | Tiefe des Partikelquaders |

Im vorliegenden Falle wurde der Druckverlust als Funktion des Massenstroms berechnet, wobei ein Massenstrombereich betrachtet wurde, der dem in den vorstehend gezeigten Messungen am erfindungsgemäßen katalytischen Reaktor entsprach.

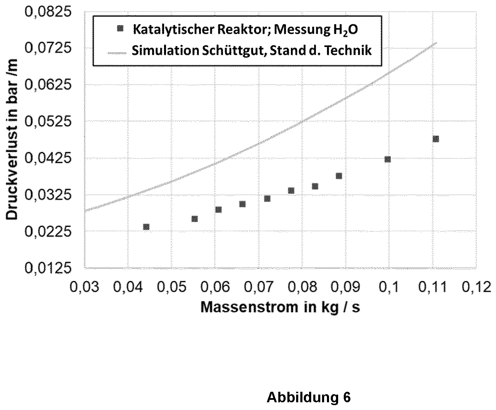

Der Vergleich der aus der Simulation erhaltenen Daten mit den am erfindungsgemäßen katalytischen Reaktor gemessenen Daten für das Strömungsmedium Wasser (Dichte: 1,015 g/ml; Viskosität: 20 mPas) zeigt, daß sich der Druckverlust über dem erfindungsgemäßen System gegenüber dem nicht porösen Schüttgutsystem um ca. 35 bis 40 % reduziert (siehe Abbildung 6).

Untersuchungen zur mechanischen Stabilität:

Um die hohe mechanische Stabilität des Katalysatorfestbetts nachzuweisen, die eine Vermeidung von Katalysatorbruch über die Betriebsdauer erlaubt, werden die Ergebnisse von Untersuchungen zur Bruchfestigkeit von Proben einer erfindungsgemäßen Trägerstruktur im Vergleich zu Messungen an Schüttgutpartikeln nach dem Stand der Technik vorgelegt.

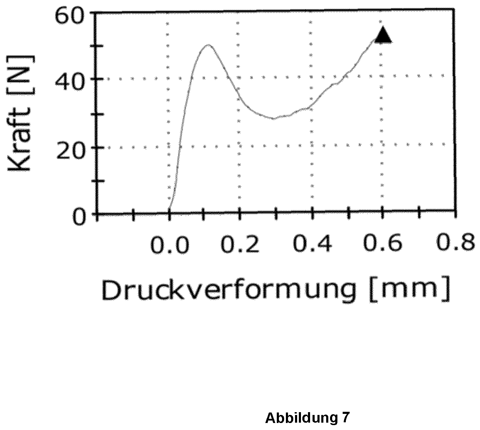

Abbildung 7 zeigt beispielhaft das Ergebnis einer Druckfestigkeitsmessung an einer Probe einer erfindungsgemäßen Trägerstruktur mit einer Dimension von 4 mm × 4 mm × 2 mm, durchgeführt an einem handelsüblichen Instron-Messgerät zur Bestimmung der Druckfestigkeit.

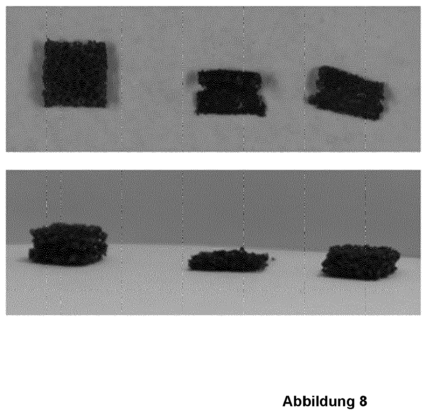

Ergänzend dazu zeigt Abbildung 8 die Verformung getesteter Proben nach der Durchführung der Druckfestigkeitsmessung.

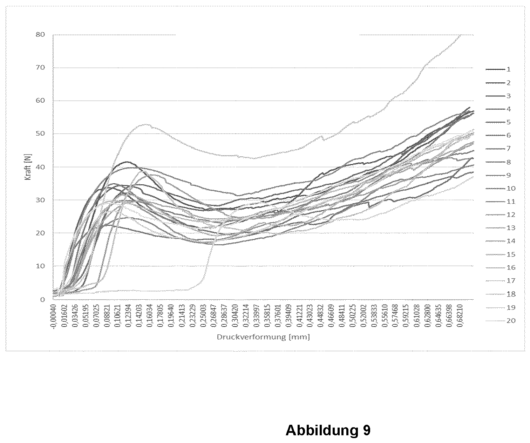

Eine Messung an insgesamt 20 Proben zeigte keinerlei Katalysatorbruch. Selbst bei Kräften bis 80 N war lediglich eine Druckverformung zu beobachten (siehe Abbildung 9).

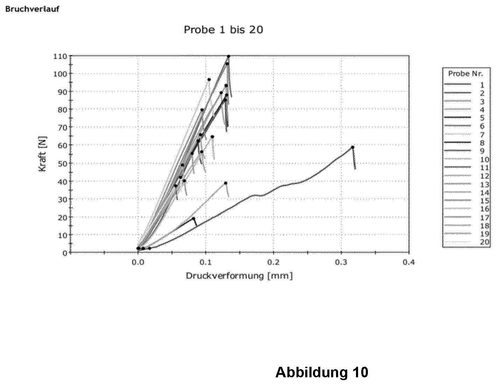

Im Vergleich dazu wurde die Druckfestigkeit an 20 Proben handelsüblicher Nickelkatalysator-Extrudate (Schüttgut nach dem Stand der Technik) der Octolyst®-Serie untersucht. Es wurden Formkörper mit einer Dimensionierung von 2 - 5 Millimetern, einer Schüttdichte von 0,7 - 1,3 kg/L und einem Nickelgehalt von 15 - 50 Gew.-% entsprechenden Druckfestigkeitsmessungen unterzogen. Abbildung 10 zeigt die erhaltenen Meßkurven. In allen Fällen endete die Prüfung mit dem Bruch des Katalysatorkörpers bei einwirkenden Kräften zwischen 20 und 110 Newton.

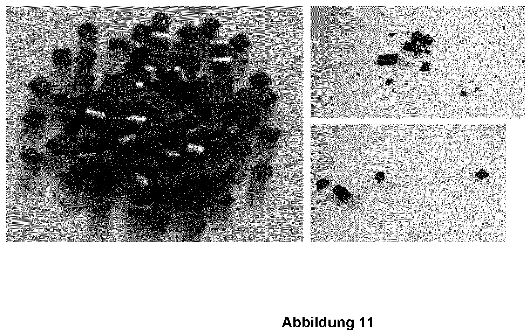

Abbildung 11 zeigt das getestete Schüttgut nach dem Stand der Technik vor der Messung und das durch die Messung erhaltene gebrochene Gut.

Die erfindungsgemäße Trägerstruktur und daraus resultierende katalytische Festbetten zeigen eine gegenüber Katalysatorfestbetten nach dem Stand der Technik deutlich verbesserte mechanischen Stabilität, die Katalysatorbruch über die Betriebsdauer des erfindungsgemäßen katalytischen Reaktors gezielt vermeidet.

Es folgt die Beschreibung der Abbildungen:

- **Abbildung 1:** nicht maßstabsgetreue Darstellung von Ausschnitten vier verschiedener erfindungsgemäßer Trägerstrukturen (A | B | C | D), in denen

    (1) Materialstege; und
    (2) Vernetzungsstellen

  gezeigt sind.

- **Abbildung 2:** mikroskopische Aufnahme einer erfindungsgemäßen metallischen Trägerstruktur mit (1) Materialstegen und (2) Vernetzungsstellen.

- **Abbildung 3:** Beispiele für Spannkraft-Stauchungskurven zur Bestimmung der Trägerdruckfestigkeit erfindungsgemäßer Trägerstrukturen mit den auszuwertenden lokalen Maxima der Spannkraft-Stauchungskurve.

- **Abbildung 4:** nicht maßstabgetreue Prinzip-Darstellung erfindungsgemäßer katalytischer Reaktoren (A) als Rieselbett-Ausführung und (B) in der Ausführung als Sumpfreaktor mit

    (1) Zufuhr des Reaktionsmediums;
    (2) Abfuhr des Reaktionsmediums;
    (3) Zufuhr von Wasserstoff-Gas;
    (4) Abfuhr von Wasserstoff-Gas;
    (5) Siebboden; und
    (6) erfindungsgemäßem katalytischen Festbett.

- **Abbildung 5:** Ergebnis der Druckverlust-Messung (Wasser, Ethylenglykol) im erfindungsgemäßenReaktor.

- **Abbildung 6:** Vergleich des Druckverlusts über dem Festbett zwischen erfindungsgemäßem Reaktor und konventionellem Schüttgutsystem.

- **Abbildung 7:** Beispielhafte Darstellung des Ergebnisses einer Druckfestigkeitsmessung an einer Probe einer erfindungsgemäßen Trägerstruktur mit einer Dimension von 4 mm $\times$ 4 mm $\times$ 2 mm.

- **Abbildung 8:** Verformung von Proben erfindungsgemäßer Trägerstrukturen nach Durchführung der Druckfestigkeitsmessung.

- **Abbildung 9:** Ergebnis der Druckfestigkeitsmessung von insgesamt 20 Proben erfindungsgemäßer Trägerstrukturen.

- **Abbildung 10:** Ergebnis der Druckfestigkeitsmessung von insgesamt 20 Proben handelsüblicher Nickelkatalysator-Extrudate der Octolyst®-Serie. Es wurden Formkörper mit einer Dimensionierung von 2 - 5 Millimetern, einer Schüttdichte von 0,7 - 1,3 kg/L und einem Nickelgehalt von 15 - 50 Gew.-% untersucht.

- **Abbildung 11:** Nickelkatalysator-Extrudate (Stand der Technik) vor und nach der Druckfestigkeitsmessungen.


**Patentansprüche**

1.  Katalytischer Reaktor,
    enthaltend ein katalytisches Festbett mit einem Volumen V, umfassend eine Trägerstruktur und einen Katalysator, **gekennzeichnet durch** folgende Merkmale:

- Das katalytische Festbett ist im Reaktionsbetrieb zu mindestens 85 Vol.-% mit Reaktionsmedium gefüllt; und
- die Kontaktfläche des Katalysators mit dem Reaktionsmedium beträgt mindestens 2000 $m^2$ pro $m^3$ Volumen des katalytischen Festbetts;

wobei die Trägerstruktur aus Materialstegen gebildet wird, die eine Dicke von 5 bis 25 μm aufweisen, wobei eine Vernetzungsdichte von mindestens 3 $mm^{-3}$ vorliegt; und

wobei die Trägerstruktur aus Metallen besteht, die ausgewählt sind aus den Elementen der 8., der 6. und der 1. Nebengruppe des Periodensystems der Elemente und Mischungen davon; und wobei

(a) die Trägerstruktur als Tragkörper für einen Katalysator dient, der in Form einer katalytisch aktiven Beschichtung auf die Trägerstruktur aufgebracht ist; oder wobei

(b) Cobalt, Nickel, Kupfer und/oder Mischungen davon Hauptbestandteil der Trägerstruktur sind und der auf die Trägerstruktur aufgebrachte Katalysator ein aktivierter Metallkatalysator ist.

2. Katalytischer Reaktor nach Anspruch 1,
   **dadurch gekennzeichnet,**
   **dass** der Anteil des durch Beschichtung auf die Trägerstruktur aufgebrachten Katalysators 2 bis 500 kg pro $m^3$ Volumen des katalytischen Festbetts beträgt.

3. Katalytischer Reaktor nach Anspruch 2,
   **dadurch gekennzeichnet,**
   **dass** der Katalysator 60 bis 99,8 Gew.-% Trägeroxide, 0,2 bis 10 Gew.-% katalytisch aktive Komponenten und gegebenenfalls Zuschlagstoffe und Funktionskomponenten enthält, jeweils bezogen auf die Gesamtmenge der den Katalysator bildenden katalytischen Beschichtung.

4. Katalytischer Reaktor nach Anspruch 3,
   **dadurch gekennzeichnet,**
   **dass** die Trägeroxide ausgewählt sind aus der Gruppe bestehend aus Aluminiumoxid, Siliziumdioxid, Titanoxid und Mischungen davon.

5. Katalytischer Reaktor nach einem der Ansprüche 3 oder 4,
   **dadurch gekennzeichnet,**
   **dass** die katalytisch aktiven Komponenten ausgewählt sind aus der Gruppe bestehend aus Eisen, Ruthenium, Osmium, Cobalt, Rhodium, Iridium, Nickel, Palladium, Platin, Kupfer, Silber, Gold und Mischungen davon.

6. Katalytischer Reaktor nach einem der Ansprüche 1 bis 5,
   **dadurch gekennzeichnet,**
   **dass** Cobalt, Nickel, Kupfer und/oder Mischungen davon Hauptbestandteil der Trägerstruktur sind.

7. Katalytischer Reaktor nach Anspruch 1,
   **dadurch gekennzeichnet, dass** Cobalt, Nickel, Kupfer und/oder Mischungen davon Hauptbestandteil der Trägerstruktur sind und der auf die Trägerstruktur aufgebrachte Katalysator ein aktivierter Metallkatalysator ist, und dass das katalytische Festbett 2 bis 17 Gew.-% Aluminium enthält, bezogen auf die Gesamtmasse des katalytischen Festbetts.

8. Katalytischer Reaktor nach Anspruch 7,
   **dadurch gekennzeichnet,**
   **dass** der aktivierte Metallkatalysator modifiziert ist mit einem Dotierungselement ausgewählt aus der Gruppe bestehend aus Molybdän, Platin, Palladium, Rhodium, Ruthenium, Kupfer und Mischungen davon.

9. Katalytischer Reaktor nach einem der Ansprüche 1 bis 8,
   **dadurch gekennzeichnet,**
   **dass** das katalytische Festbett ein Volumen von 0,5 bis 100 $m^3$ aufweist.

10. Katalytischer Reaktor nach einem der Ansprüche 1 bis 9,
    **dadurch gekennzeichnet,**
    **dass** das katalytische Festbett ein Füllgewicht zwischen 0,1 und 1 kg/m3 aufweist.

**Claims**

1. Catalytic reactor,
containing a catalytic fixed bed having a volume V comprising a support structure and a catalyst, **characterized by** the following features:

   • During operation of the reaction, the catalytic fixed bed is filled with reaction medium to at least 85% by volume; and
   • the contact area of the catalyst with the reaction medium is at least 2000 m$^2$ per m$^3$ volume of the catalytic fixed bed;

   wherein the support structure is formed from material webs having a thickness of 5 to 25 $\mu$m, with a crosslinking density of at least 3 mm$^{-3}$ present; and
   wherein the support structure consists of metals selected from elements of subgroups 8, 6 and 1 of the periodic table of the elements and mixtures thereof;
   and wherein

   (a) the support structure serves as a support body for a catalyst that is applied to the support structure in the form of a catalytically active coating;
   or wherein
   (b) cobalt, nickel, copper and/or mixtures thereof are the principal constituent of the support structure and the catalyst applied to the support structure is an activated metal catalyst.

2. Catalytic reactor according to Claim 1,
**characterized in that**
the proportion of the catalyst applied to the support structure through coating is 2 to 500 kg per m$^3$ volume of the catalytic fixed bed.

3. Catalytic reactor according to Claim 2,
**characterized in that**
the catalyst contains 60% to 99.8% by weight of support oxides, 0.2% to 10% by weight of catalytically active components and optionally additives and functional components, in each case based on the total amount of catalytic coating forming the catalyst.

4. Catalytic reactor according to Claim 3,
**characterized in that**
the support oxides are selected from the group consisting of aluminium oxide, silicon dioxide, titanium oxide and mixtures thereof.

5. Catalytic reactor according to either of Claims 3 and 4,
**characterized in that**
the catalytically active components are selected from the group consisting of iron, ruthenium, osmium, cobalt, rhodium, iridium, nickel, palladium, platinum, copper, silver, gold and mixtures thereof.

6. Catalytic reactor according to any of Claims 1 to 5,
**characterized in that**
cobalt, nickel, copper and/or mixtures thereof are the principal constituent of the support structure.

7. Catalytic reactor according to Claim 1,
**characterized in that** cobalt, nickel, copper and/or mixtures thereof are the principal constituent of the support structure and the catalyst applied to the support structure is an activated metal catalyst, and that the catalytic fixed bed contains 2% to 17% by weight of aluminium based on the total mass of the catalytic fixed bed.

8. Catalytic reactor according to Claim 7,
**characterized in that**
the activated metal catalyst is modified with a doping element selected from the group consisting of molybdenum, platinum, palladium, rhodium, ruthenium, copper and mixtures thereof.

**9.** Catalytic reactor according to any of Claims 1 to 8,
**characterized in that**
the catalytic fixed bed has a volume of 0.5 to 100 m$^3$.

**10.** Catalytic reactor according to any of Claims 1 to 9,
**characterized in that**
the catalytic fixed bed has a fill-weight of between 0.1 and 1 kg/m$^3$.

**Revendications**

**1.** Réacteur catalytique,
contenant un lit fixe catalytique de volume V, comportant une structure support et un catalyseur, **caractérisé par** les caractéristiques suivantes :

• le lit fixe catalytique est, pendant la marche du réacteur, rempli à au moins 85 % en volume d'un milieu réactionnel ; et
• l'aire de contact du catalyseur avec le milieu réactionnel est d'au moins 2 000 m$^2$ par m$^3$ de volume du lit fixe catalytique ;

la structure support étant constituée de traverses d'un matériau qui présentent une épaisseur de 5 à 25 μm, avec une densité de réticulation d'au moins 3 mm$^{-3}$ ; et
la structure support étant constituée de métaux qui sont choisis parmi les éléments du 8$^e$, du 6$^e$ et du 1$^{er}$ groupe secondaire du tableau périodique des éléments et les mélanges de ceux-ci ;
et

(a) la structure support servant de corps support d'un catalyseur, qui est appliqué sur la structure support sous forme d'un revêtement catalytiquement actif ; ou
(b) le cobalt, le nickel, le cuivre et/ou des mélanges de ceux-ci étant le constituant principal de la structure support, et le catalyseur appliqué sur la structure support est un catalyseur métallique activé.

**2.** Réacteur catalytique selon la revendication 1,
**caractérisé en ce que** la proportion du catalyseur 2 appliqué par revêtement sur la structure support va jusqu'à 500 kg par m$^3$ de volume du lit fixe catalytique.

**3.** Réacteur catalytique selon la revendication 2,
**caractérisé en ce que** le catalyseur contient 60 à 99,8 % en poids d'oxydes supports, 0,2 à 10 % en poids de composants catalytiquement actifs et éventuellement des additifs et des composants fonctionnels, chacun par rapport à la quantité totale du revêtement catalytique formant le catalyseur.

**4.** Réacteur catalytique selon la revendication 3,
**caractérisé en ce que** les oxydes supports sont choisis dans le groupe consistant en l'oxyde d'aluminium, le dioxyde de silicium, l'oxyde de titane et les mélanges de ceux-ci.

**5.** Réacteur catalytique selon l'une des revendications 3 ou 4,
**caractérisé en ce que** les composants catalytiquement actifs sont choisis dans le groupe consistant en le fer, le ruthénium, l'osmium, le cobalt, le rhodium, l'iridium, le nickel, le palladium, le platine, le cuivre, l'argent, l'or et les mélanges de ceux-ci.

**6.** Réacteur catalytique selon l'une des revendications 1 à 5,
**caractérisé en ce que** le cobalt, le nickel, le cuivre et/ou les mélanges de ceux-ci sont le constituant principal de la structure support.

**7.** Réacteur catalytique selon la revendication 1,
**caractérisé en ce que** le cobalt, le nickel, le cuivre et/ou les mélanges de ceux-ci sont le constituant principal de la structure support et le catalyseur appliqué sur la structure support est un catalyseur métallique activé, et **en ce que** le lit fixe catalytique contient 2 à 17 % en poids d'aluminium, par rapport à la masse totale du lit fixe catalytique.

8. Réacteur catalytique selon la revendication 7,
**caractérisé en ce que** le catalyseur métallique activé est modifié par un élément dopant choisi dans le groupe consistant en le molybdène, le platine, le palladium, le rhodium, le ruthénium, le cuivre et les mélanges de ceux-ci.

9. Réacteur catalytique selon l'une des revendications 1 à 8,
**caractérisé en ce que** le lit fixe catalytique présente un volume de 0,5 à 100 m$^3$.

10. Réacteur catalytique selon l'une des revendications 1 à 9,
**caractérisé en ce que** le lit fixe catalytique présente un poids de remplissage de 0,1 à 1 kg/m3.

A

C

B

D

(1)

(2)

**Abbildung 1**

(1)

(2)

500 µm

**Abbildung 2**

**Abbildung 3**

(1)

(4)

(6)

(5)

(3)

(2)

(2)

(4)

(6)

(3)

(1)

**(A)**

**(B)**

**Abbildung 4**

**Abbildung 5**

**Abbildung 6**

**Abbildung 7**

**Abbildung 8**

**Abbildung 9**

Bruchverlauf

Probe 1 bis 20

**Abbildung 10**

**Abbildung 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003047505 A

**In der Beschreibung aufgeführte Nicht-Patentliteratur**

- Catalytic Fixed-Bed Reactors. **G. EIGENBERGER ; W. RUPPEL.** Ullmann's Encyclopedia of Industrial Chemistry. Wiley-VCH, 2012
- Hydrogenation and Dehydrogenation. **D. SANFILIPPO ; P. N. RYLANDER.** Ullmann's Encyclopedia of Industrial Chemistry. Wiley-VCH, 2012
- **M. BAERNS et al.** Technische Chemie. 2013
- **ERGUN, SABRI.** Fluid flow through packed columns. *Chem. Eng. Prog.,* 1952, 48